# EUROPÄISCHE PATENTSCHRIFT

(11) **EP 3 224 831 B1**
(45) Veröffentlichungstag und Bekanntmachung des Hinweises auf die Patenterteilung: **22.08.2018**
(21) Anmeldenummer: 15784573.6
(22) Anmeldetag: 22.10.2015
(51) Int. Cl.: G10L 15/22

(54) **KRAFTFAHRZEUG-BEDIENVORRICHTUNG MIT KORREKTURSTRATEGIE FÜR SPRACHERKENNUNG**
MOTOR VEHICLE OPERATING DEVICE WITH A CORRECTION STRATEGY FOR VOICE RECOGNITION
DISPOSITIF DE COMMANDE DE VEHICULE AUTOMOBILE À STRATÉGIE DE CORRECTION DE RECONNAISSANCE VOCALE

(30) Priorität: 24.11.2014 DE 102014017384
(43) Veröffentlichungstag der Anmeldung: 04.10.2017
(73) Patentinhaber: Audi AG, 85045 Ingolstadt (DE)
(72) Erfinder: ENGELHARDT, Doreen, 85049 Ingolstadt (DE)
(86) Internationale Anmeldenummer: PCT/EP2015/002098
(87) Internationale Veröffentlichungsnummer: WO 2016/082904

(56) Entgegenhaltungen:
- US-A- 5 855 000
- US-A- 6 067 521
- US-A1- 2008 162 137

## Beschreibung

Die Erfindung betrifft ein Verfahren zum Betreiben einer Kraftfahrzeug-Bedienvorrichtung, um zu einer Spracheingabe eines Benutzers mittels eines Spracherkennungssystems zumindest ein Erkennungsergebnis zu ermitteln und dieses in Form einer Ergebnisliste auszugeben. Falls der Benutzer danach eine zweite Spracheingabe macht, wird überprüft, ob der Benutzer seine erste Spracheingabe inhaltlich wiederholt oder korrigiert, weil er das gewünschte Erkennungsergebnis nicht in der Ergebnisliste gefunden hat. Zu der Erfindung gehören auch eine Bedienvorrichtung zum Durchführen des Verfahrens sowie ein Kraftfahrzeug mit der Bedienvorrichtung.

Bei dem Kraftfahrzeug kann eine Bedienvorrichtung ein Spracherkennungssystem aufweisen und/oder über eine Funkverbindung mit einem stationären Spracherkennungssystem gekoppelt sein. Werden per Sprache Sprachinhalte eingegeben, wird dem Benutzer das erkannte Erkennungsergebnis in Form von sprachlichen und/oder graphischen Rückmeldungen präsentiert. Werden zu einer Spracheingabe mehrere Erkennungsergebnisse ermittelt, können diese als Alternativen zur Auswahl in einer Ergebnisliste präsentiert werden.

Falls ein Benutzer in der Ergebnisliste das gewünschte oder gemeinte Erkennungsergebnis, also den von ihm ausgesprochenen Sprachinhalt, nicht findet, spricht er in der Regel den Sprachinhalt noch einmal aus. Hierbei kann er dieselbe Formulierung verwenden wie bei der ersten Spracheingabe oder auch eine alternative Formulierung. Bei der Auswertung dieser zweiten Spracheingabe ist dabei seitens der Bedienvorrichtung nicht klar, ob es sich hier entweder um eine Korrektur oder einen neuen Sprachinhalt handelt. Daher wird die zweite Spracheingabe in der Regel mittels des Spracherkennungssystems genauso verarbeitet, wie die erste Spracheingabe. In der hierdurch ermittelten Ergebnisliste können also wieder dieselben Erkennungsergebnisse enthalten sein und dem Benutzer überflüssigerweise noch einmal präsentiert werden. Die im ersten Schritt vom Benutzer als inkorrekt identifizierten Ergebnisse können also nach einer erneuten Spracheingabe erneut erkannt und dem Benutzer präsentiert werden.

Aus der US 2007/0033025 A1 ist bekannt, zu einem von einem Benutzer ausgesprochenen Satz mehrere Ergebnissätze mittels eines Erkennungssystems zu ermitteln. Anschließend wird dem Benutzer eine Testfrage gestellt, ob in dem von ihm ausgesprochenen Satz ein bestimmtes Wort enthalten war. Bejaht dies der Benutzer, so werden all diejenigen Ergebnisssätze gelöscht, die das Wort nicht enthalten. Verneint der Benutzer die Testfrage, so werden all diejenigen Ergebnisssätze gelöscht, die das Wort enthalten.

Aus der US 2003/0216912 A1 ist ein Spracherkennungssystem bekannt, dass für den Fall, dass ein Benutzer denselben Satz zweimal ausspricht, übereinstimmende Anteile und voneinander abweichende Anteile in den beiden Erkennungsergebnissen zu ermitteln. Falls ein Benutzer bei der zweiten Aussprache des Satzes ein bestimmtes Wort besonders betont, so wird davon ausgegangen, dass dieses Wort im ersten Erkennungsergebnis falsch erkannt worden ist. Aus dem übereinstimmenden Anteilen und dem erneut erkannten abweichenden Anteil wird dann ein Erkennungsergebnis für eine Weiterverarbeitung gebildet.

Die US 6,067,521 A beschreibt ein Gerät und ein Verfahren für Navigationszwecke mittels Spracherkennung. Wenn dort innerhalb einer festgelegten Zeitspanne nach einer ersten Spracherkennung eine zweite Spracheingabe detektiert wird, so wird aus einem Spracherkennungsergebnis der zweiten Spracheingabe ein Spracherkennungsergebnis der vorherigen, ersten Spracherkennung ausgeschlossen. Zu dem Spracherkennungsergebnis der zweiten Spracheingabe können entsprechende Karteninformationen auf einem Anzeigegerät dargestellt werden.

Die US 5,855,000 A beschreibt ein Verfahren und ein Gerät zum Korrigieren und Reparieren eines ersten Spracherkennungsergebnisses. In letzterem wird dabei ein Fehler lokalisiert, mit einem Reparaturerkennungsergebnis aus einer zweiten Spracheingabe korreliert und durch das Reparaturerkennungsergebnis ersetzt.

Aus der EP 1 215 659 A1 wird zu einer Spracheingabe eines Benutzers ein erstes Erkennungsergebnis ermittelt und der Benutzer gefragt, ob dieses Ergebnis korrekt ist. Falls der Benutzer verneint, wird dieselbe Spracheingabe noch einmal mit geänderten Parametern des Spracherkennungssystems verarbeitet.

Der Erfindung liegt die Aufgabe zugrunde, das wiederholte Ausgeben eines falschen Erkennungsergebnisses zu vermeiden.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Erfindungsgemäß bereitgestellt ist ein Verfahren zum Betreiben einer Kraftfahrzeug-Bedienvorrichtung. In der bereits beschriebenen Weise wird eine erste Spracheingabe des Benutzers empfangen. Die erste Spracheingabe enthält einen Sprachinhalt, beispielsweise einen Satz oder ein Wort. Mittels eines Spracherkennungssystems, das fahrzeugintern (on-board) bereitgestellt sein kann oder fahrzeugextern, wird zumindest ein Erkennungsergebnis zu der ersten Spracheingabe ermittelt. Jedes Erkennungsergebnis kann also einen erkannten Satz oder ein erkanntes Wort umfassen. Davon können mehrere alternative Erkennungsergebnisse erzeugt werden, beispielsweise eine an sich bekannte N-best-Liste (N beste Erkennungsergebnisse).

Das zumindest eine Erkennungsergebnis wird an eine Ausgabeeinrichtung des Kraftfahrzeugs als Ergebnisliste ausgegeben. Durch die Ausgabeeinrichtung kann eine sprachliche oder graphische Rückmeldung an den Benutzer ausgegeben werden, nämlich die Ergebnisliste. Bei dem Verfahren wird davon ausgegangen, dass danach eine zweite Spracheingabe des Benutzers empfangen wird.

Bei dem erfindungsgemäßen Verfahren wird in der zweiten Spracheingabe eine inhaltliche Eingabewiederholung der ersten Spracheingabe erkannt. Zu beachten ist, dass eine inhaltliche Eingabewiederholung erkannt wird. Diese kann durch wortwörtliches Wiederholen der ersten Spracheingabe oder durch eine alternative sprachlichen Formulierung der ersten Spracheingabe erfolgen. Es wird also überprüft, ob der Benutzer neuen Text oder Sprachinhalt eingeben möchte oder ob der Benutzer eine Wiederholung des Sprachinhalts der ersten Spracheingabe vornimmt, weil er das gewünschte Erkennungsergebnis nicht finden in der Ausgabe der Ausgabeeinrichtung kann.

Wird erkannt, dass es sich um eine inhaltliche Eingabewiederholung handelt, so wird ein auszuschließender Anteil der Ergebnisliste ermittelt. Mit anderen Worten werden all diejenigen zur ersten Spracheingaben ermittelten Erkennungsergebnisse oder ein Teil eines Erkennungsergebnisses ermittelt, der im Zusammenhang mit der Spracherkennung der zweiten Spracheingabe nicht noch einmal als Erkennungsergebnisse präsentiert werden sollen. Beim Ermitteln eines Erkennungsergebnisses zu der zweiten Spracheingabe wird entsprechend dieser auszuschließende Anteil als mögliches Erkennungsergebnis ausgeschlossen. Als der auszuschließende Anteil wird erfindungsgemäß derjenige Anteil der Ergebnisliste ermittelt, der von der Ausgabeeinrichtung erfolgreich an den Benutzer ausgegeben worden ist. Zum Ermitteln des erfolgreich ausgegebenen Anteils wird dabei ein Scrollvorgang der Ausgabeeinrichtung ausgewertet.

Durch die Erfindung ergibt sich der Vorteil, dass dem Benutzer der auszuschließende Anteil nicht noch einmal ausgegeben wird, sodass ein falsches Erkennungsergebnis hierdurch mit hoher Wahrscheinlichkeit kein zweites Mal ausgegeben wird.

Bei dem erfindungsgemäßen Verfahren ergeben sich unterschiedliche Weiterbildungen in Abhängigkeit davon, wie die beschriebene inhaltliche Eingabewiederholung erkannt wird.

Eine Weiterbildung der Erfindung sieht hierzu vor, dass die inhaltliche Eingabewiederholung daran erkannt wird, dass der Benutzer eine vorbestimmte, für eine Eingabekorrektur vorgesehene Bedienhandlung durchführt. Beispielsweise kann hierfür eine Bedientaste oder ein Signalwort vorgesehen sein.

Bei einer anderen Weiterbildung wird die inhaltliche Eingabewiederholung daran erkannt, dass in der zweiten Spracheingabe selbst ein vorbestimmtes Korrekturschlagwort erkannt wird. Beispielsweise kann überprüft werden, ob in der zweiten Spracheingabe folgende Worte enthalten sind: "Nein, ich meinte ...".

Bei einer anderen Weiterbildung wird die inhaltliche Eingabewiederholung daran erkannt, dass die erste Spracheingabe und die zweite Spracheingabe einen vorbestimmten prosodischen Unterschied aufweisen. Mit anderen Worten wird hier die Sprachmelodie erfasst und klassifiziert. Für die Erkennung und Klassifizierung der Prosodie in einer Spracheingabe kann auf an sich bekannte Verfahren zurückgegriffen werden. Typische Klassifizierungen können ergeben: ruhig, nervös, gereizt. Indem zwischen der ersten und der zweiten Spracheingabe ein vorbestimmter prosodischer Unterschied erkannt wird, beispielsweise der Wechsel von ruhig nach gereizt, kann ebenfalls darauf geschlossen werden, dass es sich um eine inhaltliche Eingabewiederholung handelt.

Bei einer anderen Weiterbildung wird die inhaltliche Eingabewiederholung daran erkannt, dass die erste Spracheingabe und die zweite Spracheingabe zu einem vorbestimmten Mindestanteil miteinander übereinstimmen. Hierbei wird also die zweite Spracheingabe ebenfalls mittels des Spracherkennungssystems zunächst in zumindest ein Erkennungsergebnis umgewandelt und anschließend die Erkennungsergebnisse zur ersten Spracheingabe und zur zweiten Spracheingabe verglichen, z.B. auf Wortebene oder Buchstabenebene.

Andere Weiterbildungen des erfindungsgemäßen Verfahrens betreffen die Art und Weise, wie der auszuschließende Anteil beim Ermitteln des Erkennungsergebnisses zu der zweiten Spracheingabe ausgeschlossen wird.

Eine Weiterbildung sieht hierzu vor, dass zum Ausschließen des auszuschließenden Anteils ein Vokabular oder eine Grammatik des Spracherkennungssystems verändert wird. Es können also beispielsweise Erkennhypothesen aus der ersten Erkennung für die zweite Erkennung verworfen werden. Mit anderen Worten wird die Grammatik des Spracherkennungssystems dynamisch angepasst. Hierdurch ergibt sich der Vorteil, dass die Laufzeitdauer für den Erkennungsvorgang verkürzt wird.

Eine andere Weiterbildung sieht vor, dass zum Ausschließen des auszuschließenden Anteils zunächst mittels des Spracherkennungssystems zumindest ein Standarderkennungsergebnis zu der zweiten Spracheingabe ermittelt wird. Mit Standard-Erkennungsergebnis ist gemeint, dass eine im Vergleich zur Erkennung der ersten Sprecheingabe verwendete unveränderte Grammatik verwendet wird. Anschließend wird aus dem Standard-Erkennungsergebnis der auszuschließende Anteil herausgefiltert. Mit anderen Worten werden z.B. all diejenigen Erkennungsergebnisse, die schon einmal ausgegeben worden sind, aus der Ergebnisliste gelöscht. Hierdurch ergibt sich der Vorteil, dass das Spracherkennungssystem nicht manipuliert werden muss, was insbesondere bei fahrzeugexternen Spracherkennungssystemen vorteilhaft ist.

Im Folgenden sind Weiterbildungen des erfindungsgemäßen Verfahrens beschrieben, die das Ermitteln des auszuschließenden Anteils betreffen.

Das erfindungsgemäße Verfahren sieht vor, dass als der auszuschließende Anteil derjenige Anteil der Ergebnisliste ermittelt wird, der von der Ausgabeeinrichtung erfolgreich an den Benutzer ausgegeben worden ist. Es wird also nur das ausgeschlossen, was auch tatsächlich dem Benutzer z.B. angezeigt worden ist.

Eine Weiterbildung hierzu betrifft das Ausgeben der Ergebnisliste über eine graphische Anzeigevorrichtung deren Anzeigefläche kleiner als die Ergebnisliste ist. Bei dem erfindungsgemäßen Verfahren wird zum Ermitteln des erfolgreich ausgegebenen Anteils ein Scrollvorgang der Ausgabeeinrichtung ausgewertet. Es wird also überprüft, welcher Anteil der Ergebnisliste tatsächlich auf der Anzeigefläche angezeigt oder dargestellt worden ist. Das Auswerten des Scrollvorgangs, beispielsweise das Auswerten von Koordinaten oder eines Scrollsignals, ist ein zuverlässiger Indikator für die erfolgreiche Ausgabe.

Gemäß einer anderen Weiterbildung wird dahingehend unterschieden, ob ein Erkennungsergebnis der Ergebnisliste nur ausgegeben oder ob es auch vom Benutzer wahrgenommen worden ist. Hierzu sieht die Weiterbildung vor, dass eine Augenbewegung des Benutzers mittels eines Eyetrackingsystems oder kurz Eyetrackers (Augenverfolger) erfasst wird. Zum Ermitteln des erfolgreich ausgegebenen Anteils wird aus der Ergebnisliste nur derjenige Anteil ausgewählt, welcher gemäß der erfassten Augenbewegung von dem Benutzer betrachtet worden ist. Beispielsweise kann hierzu also ein Blickrichtungsvektor extrapoliert werden und überprüft werden, wo der extrapolierte Blickrichtungsvektor auf der Anzeigefläche auftrifft. Hierzu geeignete Eyetracker sind an sich im Stand der Technik verfügbar.

Eine andere Weiterbildung sieht vor, dass zusätzlich aus der Ergebnisliste der vom Benutzer betrachtete Anteil nur dann ausgewählt wird, falls der Benutzer dieses Erkennungsergebnis für eine vorbestimmte Mindestzeitdauer betrachtet hat. Hierdurch ergibt sich der Vorteil, dass zwischen einem abwesenden Überfliegen der Ergebnisse einerseits und einer tatsächlichen inhaltlichen Wahrnehmung durch Lesen unterschieden werden kann. Es wird also die Geschwindigkeit beim Lesen ausgewertet.

Zu der Erfindung gehört auch eine Bedienvorrichtung für ein Kraftfahrzeug. Diese weist eine Spracherfassungseinrichtung zum Erfassen einer Spracheingabe eines Benutzers auf, also beispielsweise ein Mikrofon oder eine Anordnung aus mehreren Mikrofonen. Des Weiteren ist eine Ausgabeeinrichtung zum Ausgeben einer Ergebnisliste mit zumindest einem zu der erfassten Spracheingabe ermittelten Erkennungsergebnis bereitgestellt. Die Ausgabeeinrichtung kann für eine sprachliche Ausgabe durch eine synthetische Stimme und/oder eine graphische Ausgabe ausgelegt sein. Für eine graphische Ausgabe kann sie beispielsweise einen Bildschirm aufweisen. Die erfindungsgemäße Bedienvorrichtung ist durch eine Prozessoreinrichtung gekennzeichnet, welche dazu ausgelegt ist, eine Ausführungsform des erfindungsgemäßen Verfahrens durchzuführen.

Schließlich gehört zu der Erfindung auch ein Kraftfahrzeug, welches eine Ausführungsform der erfindungsgemäßen Bedienvorrichtung aufweist. Das erfindungsgemäße Kraftfahrzeug ist bevorzugt als Kraftwagen, insbesondere als Personenkraftwagen, ausgestaltet.

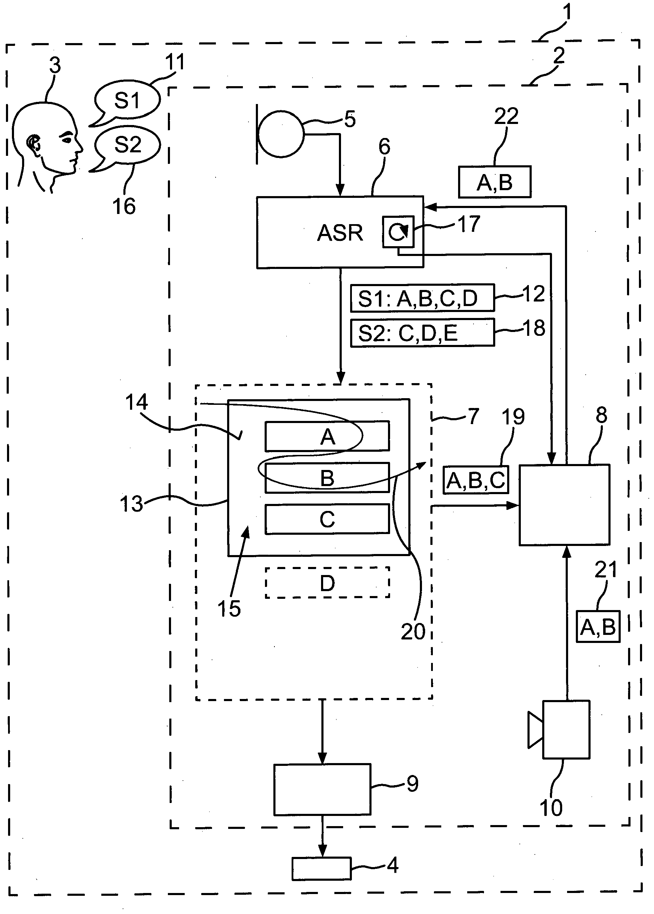

Im Folgenden ist ein Ausführungsbeispiel der Erfindung beschrieben. Hierzu zeigt die einzige Fig. eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt schematisch ein Kraftfahrzeug 1, bei dem es sich um einen Kraftwagen, insbesondere einen Personenkraftwagen, handeln kann. Das Kraftfahrzeug 1 kann eine Bedienvorrichtung 2 aufweisen, mittels welcher ein Benutzer 3 des Kraftfahrzeugs 1 eines oder mehrere Geräte 4 des Kraftfahrzeugs bedienen kann. Bei den Geräten kann es sich beispielsweise um eines oder mehrere aus den folgenden handeln: ein Medienabspielgerät, ein Telematiksystem, ein Navigationsgerät, ein Telefon.

Durch die Bedienvorrichtung 2 kann eine Sprachbedienung der Geräte 4 ermöglicht sein. Hierzu kann die Bedienvorrichtung 2 eine Spracherfassungseinrichtung 5, eine Spracherkennungseinrichtung 6, eine Ausgabeeinrichtung 7, eine Steuereinrichtung 8 und eine Signalerzeugungseinrichtung 9 aufweisen. Es kann auch eine Ausführungsform vorgesehen sein, bei welcher ein Eyetracker 10 bereitgestellt ist, wie er an sich aus dem Stand der Technik bekannt ist. Mittels eines Eyetrackers 10 kann beispielsweise die Blickrichtung der Augen des Benutzers 3 ermittelt und/oder verfolgt werden.

Zur Sprachbedienung kann der Benutzer 3 eine Spracheingabe 11 machen. In der Figur ist symbolisch ein Sprachinhalt oder eine Sprachäußerung S1 als Spracheingabe 11 dargestellt. In dem veranschaulichten Beispiel möchte der Benutzer 3 ein Navigationsgerät bedienen und eine Routenplanung nach München anstoßen. Die Sprachäußerung S1 kann beispielsweise lauten: "Führe mich nach München!". Die Spracherfassungseinrichtung kann den Sprachschall der Spracheingabe 11 erfassen. Hierzu kann die Erfassungseinrichtung 5 beispielsweise eines oder mehrere Mikrofone aufweisen. Durch die Spracherfassungseinrichtung 5 wird der Sprachschall in ein elektrisches und/oder digitales Sprachsignal gewandelt und an die Spracherkennungseinrichtung 6 (ASR - Automatic Speech Recognition - automatische Spracherkennung) ausgegeben.

Die Spracherkennungseinrichtung 6 kann ein Spracherkennungssystem umfassen oder beispielsweise über eine (nicht dargestellten) Mobilfunkverbindung mit einem stationären Spracherkennungssystem, beispielsweise ein Spracherkennungssystem des Internets, gekoppelt sein. Durch die Spracherkennungseinrichtung 6 kann die Spracheingabe 11 in an sich bekannter Weise dekodiert werden, das heißt die Sprachäußerung S1 als Text erkannt werden. Die Spracherkennung kann beispielsweise auf der Grundlage von Hidden-Markrov-Modellen (HMM) durchgeführt werden.

Bei einer Spracherkennung kann es zu einer Spracheingabe 11 eines oder mehrere Erkennungsergebnisse geben. In dem Beispiel sei angenommen, dass die Spracheingabe 11 mit der Sprachäußerung S1 zu mehreren Spracherkennungsergebnissen A, B, C, D führt. Beispielsweise können sich die Spracherkennungsergebnisse in dem erkannten Zielort unterscheiden, sodass beispielsweise das Erkennungsergebnis A lauten kann: "Führe mich nach Bonn!", die das Spracherkennungsergebnis B: "Führe mich nach Berlin!", das Erkennungsergebnis C: "Führe mich nach München!" und das Erkennungsergebnis D: "Führe mich nach Salzburg!"

Die Erkennungsergebnisse A, B, C, D können von der Spracherkennungseinrichtung 6 zu einer Ergebnisliste 12 zusammengefasst werden, die an die Ausgabeeinrichtung 7 ausgegeben werden kann. Die Ausgabeeinrichtung 7 kann die Erkennungsergebnisse A, B, C, D an den Benutzer 3 ausgeben, damit dieser das richtige Erkennungsergebnis aussucht. Hierzu kann die Ausgabeeinrichtung 7 die Ergebnisliste 7 beispielsweise als Sprachsignal ausgeben, also eine akustische Ausgabe, oder eine Anzeigeeinrichtung 13 aufweisen, beispielsweise einen Bildschirm. Auf einer Anzeigefläche 14 der Anzeigeeinrichtung 13 kann ein Auswahlmenü 15 mit den Erkennungsergebnissen A, B, C, D der Ergebnisliste 12 aus angezeigt werden. Die Anzeigefläche 14 kann derart klein sein, dass die Ergebnisliste 12 zu einem gegebenen Zeitpunkt nicht vollständig angezeigt werden kann. In dem Beispiel der Figur ist veranschaulicht, dass das Erkennungsergebnis D gerade nicht angezeigt wird. Der Benutzer 3 kann das Auswahlmenü 15 beispielsweise durch Scrollen auf der Anzeigefläche 14 verschieben, sodass weitere Erkennungsergebnisse auf der Anzeigefläche 14 dargestellt werden.

Der Benutzer 3 kann nun das von ihm gemeinte Ergebnis auswählen. Hierzu kann die Anzeigeeinrichtung 13 beispielsweise berührungssensitiv ausgestaltet sein, sodass der Benutzer 3 das korrekte Erkennungsergebnis in dem Auswahlmenü 15 beispielsweise antippen kann. Das ausgewählte Erkennungsergebnis kann an die Signalerzeugungseinrichtung 9 übergeben werden. Die Signalerzeugungseinrichtung 9 kann in Abhängigkeit von dem ausgewählten Erkennungsergebnis dann in an sich bekannter Weise einen Steuerbefehl erzeugen, welcher an das passende Gerät aus der Gruppe der Geräte 4 ausgegeben werden kann. In dem Beispiel wird dann bei dem Navigationsgerät eine Routenplanung veranlasst oder ausgelöst oder parametriert.

Bei dem Kraftfahrzeug 1 ist dem Benutzer die Möglichkeit gegeben, eine Erkennungskorrektur vorzunehmen. Falls der Benutzer 3 das gewünschte Erkennungsergebnis nicht in der Ergebnisliste 12 finden kann, kann er eine weitere Spracheingabe 16 vornehmen oder tätigen. Beispielsweise kann als Spracheingabe 16 von dem Benutzer 3 ein Sprachinhalt oder eine Sprachäußerung S2 ausgesprochen werden. Hierbei kann der Benutzer 3 die Sprachäußerung S1 einfach wiederholen, also nochmal aussprechen: "Führe mich nach München!". Er kann aber auch eine andere Sprachäußerung aussprechen, beispielsweise: "Nein, ich meine München."

Die Spracheingabe 16 kann in der beschriebenen Weise durch die Spracherfassungseinrichtung 5 erfasst werden und durch die Spracherkennungseinrichtung 6 bearbeitet werden. Die Spracherkennungseinrichtung 6 kann eine Wiederholungserkennung 17 aufweisen, welche dazu ausgelegt sein kann, eine inhaltliche Eingabewiederholung der ersten Spracheingabe 11 zu erkennen. Beispielsweise kann nach einer Dekodierung oder Erkennung der Spracheingabe 16 durch die Wiederholungserkennung 17 erkannt werden, ob ein Signalwort oder Schlüsselwort in der Spracheingabe 16 enthalten ist. Im vorliegenden Fall kann also beispielsweise das Wort "Nein" als Korrekturwunsch interpretiert werden. Falls der Benutzer 3 seine Eingabe wiederholt, also nochmal ausspricht beispielsweise: "Führe mich nach München!", so kann durch die Wiederholungserkennung 17 beispielsweise an dem Erkennungsergebnis erkannt werden, dass mehrere Worte, beispielsweise mehr als 60 Prozent oder mehr als 70 Prozent, mit den Erkennungsergebnissen zur ersten Spracheingabe 11 übereinstimmen. Es kann auch beispielsweise vorgesehen sein, dass der Benutzer 3 während des Aussprechens der Spracheingabe 16 eine Korrekturtaste drücken muss, was dann ebenfalls von der Wiederholungserkennung 17 erkannt werden kann. Es kann auch beispielsweise eine Prosodieanalyse der Sprachmelodie der Spracheingaben 11 und 16 erfolgen und ein Vergleich durchgeführt werden. Wird der Benutzer 3 ungeduldig oder wütend, so kann dies an einer Veränderung der Prosodie, also des Sprachmelodieverlaufs, erkannt werden. Prosodieerkennung ist an sich aus dem Stand der Technik bekannt. Die Wiederholungserkennung 17 kann beispielsweise ein Programmmodul einer Prozessoreinrichtung der Bedienvorrichtung 2 sein.

Die Wiederholungserkennung 17 kann den erkannten Korrekturwunsch des Benutzers 3 dann beispielsweise an die Steuereinrichtung 8 signalisieren. Die Steuereinrichtung 8 kann dazu ausgelegt sein, für die Erzeugung einer zweiten Ergebnisliste 18 durch die Spracherkennungseinrichtung 6 zunächst diejenigen Erkennungsergebnisse, die der Benutzer 3 schon überprüft hat, aus der Ergebnisliste 18 auszuschließen, damit der Benutzer 3 nicht noch einmal mit den falschen Erkennungsergebnissen konfrontiert wird. Die Steuereinrichtung 8 kann beispielsweise ein Programmmodul einer Prozessoreinrichtung der Bedienvorrichtung 2 sein.

Die Steuervorrichtung 8 kann beispielsweise von der Anzeigeeinrichtung 7 eine Anzeigeliste 19 empfangen, welche angibt, welcher Teil der Ergebnisliste 12 bereits auf der Anzeigefläche 14 dargestellt worden ist. Zusätzlich oder alternativ dazu kann die Steuereinrichtung 8 von dem Eyetracker 10 beispielsweise Blickrichtungskoordinaten empfangen, welche über eine Blickrichtungsspur 20 beschreiben können, anhand welcher ermittelt werden kann, welche Menüeinträge des Menüs 15 der Benutzer 3 tatsächlich angeschaut hat und/oder wie lange er welchen Menüeintrag des Menü 15 angeschaut hat. Entsprechende Blickrichtungsdaten 21 können von dem Eyetracker 10 an die Steuereinrichtung 8 bereitgestellt sein.

In dem Beispiel ist davon ausgegangen, dass die Steuereinrichtung 8 von dem Eyetracker 10 die Blickrichtungsdaten 21 empfängt und die Spracherkennungseinrichtung 6 dahingehend konfiguriert dass ein auszuschließender Anteil 22 aus dem Spracherkennungsergebnissen A, B, C, D der ersten Spracheingabe 11 für die Erkennung des Sprachinhalts S2 auszuschließen ist. Beispielsweise können also die Worte Bonn und Berlin (A, B) ausgeschlossen werden. Insbesondere kann also nicht ein vollständiges Spracherkennungsergebnis, sondern nur ein Einzelwort daraus als auszuschließender Anteil 22 festgelegt sein. Die Spracherkennungseinrichtung 6 kann dann aus dem Erkennungsergebnissen, die zu der Spracheingabe 16 ermittelt wurden, den auszuschließenden Anteil 22 ausschließen oder herausfiltern.

Entsprechend wird durch die Spracherkennungseinrichtung 6 in dem veranschaulichten Beispiel eine Ergebnisliste 18 erzeugt, die zu der Sprachäußerung S2 die Spracherkennungsergebnisse C, D, E enthalten kann. Es sind also die auszuschließenden Anteile, hier A, B, ausgeschlossen. Die Ergebnisliste 18 kann also zusätzlich zu den Erkennungsergebnissen C, D auch noch beispielsweise das Erkennungsergebnis E: "Führe mich nach Paris!" enthalten.

In der Figur ist nicht weiter veranschaulicht, die durch den Benutzer 3 durch die Ausgabeeinrichtung 7 nun beispielsweise auf der Anzeigefläche 14 die Ergebnisliste 18 angezeigt oder ausgegeben werden kann. Der Benutzer 3 kann dann das Richtige Erkennungsergebnis auswählen, woraufhin in der beschriebenen Weise durch die Signalerzeugungseinrichtung 9 ausgegeben werden kann und hierdurch die Geräte 4 angesteuert werden können.

Durch die Bedienvorrichtung 2 wird also eine nutzerseitige Korrektur festgestellt, sodass bereits erkannte Ergebnisse der vorhergehenden Eingabe als Hypothese verworfen werden können und somit dem Benutzer nicht erneut präsentiert werden. Hierdurch ergibt sich der Vorteil, dass die Erkennung für die zweite Eingabe verbessert werden kann, da die Erkennungsergebnisse aus der ersten Eingabe nicht berücksichtigt werden müssen. Zusätzlich werden dem Benutzer nicht die als falsch identifizierten Ergebnisse präsentiert. Das System erscheint dem Benutzer deutlich intelligenter. Umgesetzt wird dies, indem eine nutzerseitige Korrektur festgestellt wird, sodass die Erkennungsergebnisse von der ersten Eingabe nicht für die Erkennung im zweiten Schritt genutzt werden. Die Erkennungshypothesen aus der ersten Erkennung werden für die zweite Erkennung somit verworfen.

Insgesamt zeigt das Beispiel, wie durch die Erfindung eine Korrekturstrategie für Spracheingaben per Sprache bereitgestellt werden kann.

## Patentansprüche

1. Verfahren zum Betreiben einer Kraftfahrzeug-Bedienvorrichtung (2), wobei
- eine erste Spracheingabe (11) eines Benutzers (3) empfangen wird,
- mittels eines Spracherkennungssystems zumindest ein Erkennungsergebnis (A-D) zu der ersten Spracheingabe (11) ermittelt wird,
- das zumindest eine Erkennungsergebnis (A-D) an eine Ausgabeeinrichtung (7) des Kraftfahrzeugs (1) als Ergebnisliste (12) ausgegeben wird,
- eine zweite Spracheingabe (16) des Benutzer (3) empfangen wird,
- in der zweiten Spracheingabe (16) eine inhaltliche Eingabewiederholung der ersten Spracheingabe (11) erkannt wird, und
- ein auszuschließender Anteil (22) der Ergebnisliste (12) ermittelt wird, **dadurch gekennzeichnet, dass**
- beim Ermitteln eines Erkennungsergebnisses (C-E) zu der zweiten Spracheingabe (16) der auszuschließende Anteil (22) als mögliches Erkennungsergebnis ausgeschlossen wird und
- als der auszuschließende Anteil (22) derjenige Anteil der Ergebnisliste (12) ermittelt wird, der von der Ausgabeeinrichtung (7) erfolgreich an den Benutzer (3) ausgegeben worden ist, wobei
- zum Ermitteln des erfolgreich ausgegebenen Anteils (19) ein Scrollvorgang der Ausgabeeinrichtung (7) ausgewertet wird.

2. Verfahren nach Anspruch 1, wobei die inhaltliche Eingabewiederholung auf der Grundlage zumindest eines der folgenden Kriterien erkannt wird:
- Der Benutzer (3) führt eine vorbestimmte, für eine Eingabekorrektur vorgesehene Bedienhandlung durch;
- Es wird in der zweiten Spracheingabe (16) ein vorbestimmtes Korrekturschlagwort erkannt;
- Die erste Spracheingabe (11) und die zweite Spracheingabe (16) weisen einen vorbestimmten prosodischen Unterschied auf;
- Die erste Spracheingabe (11) und die zweite Spracheingabe (16) stimmen zu einem vorbestimmten Mindestanteil miteinander überein.

3. Verfahren nach einem der vorhergehenden Ansprüche, wobei zum Ausschließen des auszuschließende Anteils (22) eine Grammatik des Spracherkennungssystems verändert wird.

4. Verfahren nach einem der vorhergehenden Ansprüche, wobei zum Ausschließen des auszuschließende Anteils (22) mittels des Spracherkennungssystems zumindest ein Standard-Erkennungsergebnis zu der zweiten Spracheingabe (16) ermittelt wird und aus dem Standard-Erkennungsergebnis der auszuschließende Anteil (22) herausgefiltert wird.

5. Bedienvorrichtung (2) für ein Kraftfahrzeug (1), aufweisend:
- eine Spracherfassungseinrichtung (5) zum Erfassen einer Spracheingabe (11, 16) eines Benutzers (3),
- eine Ausgabeeinrichtung (7) zum Ausgeben einer Ergebnisliste (12, 16) mit zumindest einem zu der erfassten Sprachausgabe (11, 16) ermittelten Erkennungsergebnis (A-E),
**gekennzeichnet durch**
eine Prozessoreinrichtung, welche dazu ausgelegt ist, ein Verfahren nach einem der vorhergehenden Ansprüche durchzuführen.

6. Kraftfahrzeug (1) mit einer Bedienvorrichtung (2) nach Anspruch 5.

## Claims

1. Method for operating a motor vehicle operating device (2), wherein
- a first speech input (11) of a user (3) is received,
- at least one recognition result (A-D) relating to the first speech input (11) is determined by means of a speech recognition system,
- the at least one recognition result (A-D) is output to an output device (7) of the motor vehicle (1) as a result list (12),
- a second speech input (16) of the user (3) is received,
- a content input repetition of the first speech input (11) is recognised in the second speech input (16), and
- an excludable portion (22) of the result list (12) is determined,
**characterised in that**
- when determining a recognition result (C-E) relating to the second speech input (16) the excludable portion (22) is excluded as a possible recognition result and
- the particular portion of the result list (12) is determined as the excludable portion (22) which has been successfully output by the output device (7) to the user (3), wherein
- for determining the portion (19) that has been successfully output a scrolling operation of the output device (7) is evaluated.

2. Method according to claim 1, wherein repetition of the input content is recognised on the basis of at least one of the following criteria:
- the user (3) performs a predetermined operation provided for input correction,
- a predetermined correction keyword is recognised in the second speech input (16),
- the first speech input (11) and the second speech input (16) have a predetermined prosodic difference,
- the first speech input (11) and the second speech input (16) correspond with one another in a predetermined minimum portion.

3. Method according to any of the preceding claims, wherein to exclude the excludable portion (22) a grammar system of the speech recognition system is changed.

4. Method according to any of the preceding claims, wherein in order to exclude the excludable portion (22) by means of the speech recognition system at least one standard recognition result is determined for the second speech input (16) and the excludable portion (22) is filtered out of the standard recognition result.

5. Operating device (2) for a motor vehicle (1) comprising:
- a speech recognition device (5) for detecting a speech input (11, 16) of user (3),
- an output device (7) for outputting a result list (12, 16) including at least one recognition result (A-E) determined for the detected speech output (11, 16), **characterised by**
a processor device which is configured to carry out a method according to any of the preceding claims.

6. Motor vehicle (1) comprising an operating device (2) according to claim 5.

## Revendications

1. Procédé pour faire fonctionner un dispositif de commande de véhicule automobile (2), dans lequel
- une première entrée vocale (11) d'un utilisateur (3) est reçue,
- au moyen d'un système de reconnaissance vocale, au moins un résultat de reconnaissance (A-D) est déterminé pour la première entrée vocale (11),
- l'au moins un résultat de reconnaissance (A-D) est émis vers un système d'émission (7) du véhicule automobile (1) en tant que liste de résultats (12),
- une seconde entrée vocale (16) de l'utilisateur (3) est reçue,
- dans la seconde entrée vocale (16) est reconnue une répétition du contenu d'entrée de la première entrée vocale (11), et
- une partie à exclure (22) de la liste de résultats (12) est déterminée,
**caractérisé en ce que**
- lors de la détermination d'un résultat de reconnaissance (C-E) pour la seconde entrée vocale (16), la partie à exclure (22) est exclue en tant qu'éventuel résultat de reconnaissance et
- en tant que partie à exclure (22) est déterminée la partie de la liste de résultats (12) qui a été émise avec succès par le système d'émission (7) à l'intention de l'utilisateur (3), dans lequel
- pour la détermination de la partie émise avec succès (19) est évaluée une opération de défilement du système d'émission (7).

2. Procédé selon la revendication 1, dans lequel la répétition du contenu d'entrée est reconnue sur la base d'au moins un des critères suivants :
- l'utilisateur (3) exécute une manipulation de commande prédéterminée, prévue pour une correction d'entrée ;
- un mot-clé de correction prédéterminé est reconnu dans la seconde entrée vocale (16) ;
- la première entrée vocale (11) et la seconde entrée vocale (16) présentent une différence prosodique prédéterminée ;
- la première entrée vocale (11) et la seconde entrée vocale (16) concordent avec une partie minimale prédéterminée.

3. Procédé selon l'une quelconque des revendications précédentes, dans lequel une grammaire du système de reconnaissance vocale est modifiée pour l'exclusion de la partie à exclure (22).

4. Procédé selon l'une quelconque des revendications précédentes, dans lequel, pour l'exclusion de la partie à exclure (22) au moyen du système de reconnaissance vocale, au moins un résultat de reconnaissance standard est déterminé pour la seconde entrée vocale (16) et la partie à exclure (22) est éliminée par filtrage du résultat de reconnaissance standard.

5. Dispositif de commande (2) pour un véhicule automobile (1), présentant :
- un système de reconnaissance vocale (5) pour la détection d'une entrée vocale (11, 16) d'un utilisateur (3),
- un système d'émission (7) pour l'émission d'une liste de résultats (12, 16) avec au moins un résultat de reconnaissance (A-E) déterminé pour l'émission vocale (11, 16) détectée,
**caractérisé par**
un système de processeur qui est conçu pour exécuter un procédé selon l'une quelconque des revendications précédentes.

6. Véhicule automobile (1) avec un dispositif de commande (2) selon la revendication 5.
